# EUROPEAN PATENT SPECIFICATION

(11) **EP 2 485 966 B1**
(45) Date of publication and mention of the grant of the patent: **11.05.2016**
(21) Application number: 10771507.0
(22) Date of filing: 08.10.2010
(51) Int. Cl.: B65D 83/14

(54) **LIQUID DISPENSING APPARATUS**
FLÜSSIGKEITSSPENDER
APPAREIL DE DISTRIBUTION DE LIQUIDE

(30) Priority: 01.04.2010 GB 201005567; 09.10.2009 GB 0917731; 11.11.2009 US 260052 P
(43) Date of publication of application: 15.08.2012
(73) Proprietor: The Salford Valve Company Limited, Driffield, Humberside YO25 6QP (GB)
(72) Inventor: GHAVAMI-NASR, Ghasem, Salford Greater Manchester MK5 4WT (GB); YULE, Andrew John, Salford Greater Manchester MK5 4WT (GB); BURBY, Martin Laurence, Salford Greater Manchester MK5 4WT (GB)
(74) Representative: Gill Jennings & Every LLP
(86) International application number: PCT/GB2010/051689
(87) International publication number: WO 2011/042752

(56) References cited:
- EP-A1- 0 352 915
- WO-A2-2004/041340
- FR-A- 1 598 257
- US-A- 3 018 928
- US-A- 5 183 187

## Description

### Field of invention

The present invention relates to liquid dispensing apparatus for discharging a metered volume of a liquid. The invention relates more particularly (but not necessarily exclusively) to such an apparatus in the form of an aerosol dispensing apparatus.

### Background to invention

Two broad approaches exist to the self-propelled delivery of liquid from within an aerosol, being: (i) propulsion by means of a gas dissolved under pressure into solution with the liquid, and; (ii) the provision of substantially insoluble compressed gas within the aerosol container. Aerosol apparatus using a dissolved gas propellant (e.g. liquid natural gas, such as butane) rely upon flash-vaporisation of the dissolved gas out of the solution as a result of the pressure drop that occurs upon dispersal from the pressurised aerosol container into the atmosphere. Alternatively propulsion may be provided by an insoluble compressed gas (e.g. nitrogen, carbon dioxide or air) that is used to eject the liquid from the body of the aerosol container.

Many medical, air-freshener, insecticide and disinfectant aerosol applications require the delivery of volume metered doses from an aerosol container, and metered aerosol valves have been disclosed with respect to both methods of propulsion.

In the case of dissolved gas propellant, metered quantities of the propellant-liquid solution can be received into a metering chamber from the body of the aerosol container during a charging stage, before then being released to the atmosphere during a discharging stage, with the vaporisation of the dissolved gas (known as "flash vaporisation") driving the metered dose out of the metering chamber and into the atmosphere. The dissolved propellant used in such aerosol apparatus is typically butane, and the release of butane into the atmosphere has detrimental environmental and cost implications, as well as creating a fire safety risk. The avoidance of having to use such volatile propellants would be of significant environmental relevance.

Due to the relatively incompressible nature of the delivery liquid, a metered dose of delivery liquid will not automatically self-eject from a metering chamber. Accordingly several approaches have been used to drive the necessary ejection.

In one approach aerosol valves have been designed that bleed-off a quantity of compressed gas from the aerosol container into the metering chamber, which can then drive the accompanying liquid out of the chamber during discharge. Such a device is described in US3394851. However, such devices deplete the gas pressure within the aerosol container, thus requiring a high gas to liquid ratio with implications for manufacturing costs.

An alternative approach has used an elastomeric membrane as part of the metering chamber, which is distended during charging of a metering chamber, and which then collapses back into the chamber during the discharge stage driving the liquid contents from the metering chamber. A further related approach is known that uses a resilient bellows. Such devices are described in US4953759, US5037013 and WO9511841. Metering valves that use such resilient walls are liable to suffer from performance variations due to material variations of the resilient walls, associated implications for manufacturing yield, as well as vulnerability to reduced performance over lifetime due to deterioration of the resilient wall material.

US3018928 discloses a metering valve for dispensing a material from a container under pressure of an immiscible gas in said container comprising a valve housing for holding a predetermined quantity of said material, means for mounting said housing on said container, said housing having an inlet port for communicating said housing with said container and sealing means for sealing said housing from the atmosphere, a reciprocable valve stem cooperating with said sealing means and mounted in said housing for movement relative thereto, said stem including an upper stem portion normally projecting outwardly of said housing and having passage means therein for bypassing the sealing means and communicating said housing with the atmosphere when said stem is displaced from its normal position inwardly of said housing for dispensing material from the housing to the exterior of the container, means for closing said inlet port when said housing is communicated with said atmosphere and ejection means disposed between said housing and container and acted upon by the pressure in said container to force said material outwardly of said housing through said upper stem portion when a pressure differential is created between said housing and said container.

WO2004/041340 discloses an aerosolization apparatus comprising a container containing a pharmaceutical formulation, the pharmaceutical formulation comprising an active agent and a propellant. The aerosolization apparatus further comprises a metering chamber in communication with the container, the metering chamber adapted to hold a metered amount of the pharmaceutical formulation, a valve to allow the metered amount of the pharmaceutical formulation to be released from the metering chamber when the valve is actuated, and a pressurizer that applies pressure to the pharmaceutical formulation in the metering chamber while the pharmaceutical formulation is being released from the metering chamber. In one version, the metering chamber is sized so that at least 2 mg, and preferably at least 5 mg, of the active agent is be aerosolized for delivery to a user during inhalation.

US5183187 discloses a fluid dispenser having a spring biased piston that is mounted for reciprocable movement along a stem member which is moved longitudinally to actuate the dispenser. A metering chamber is located between the end of the piston and the end wall of a cylindrical chamber in which the piston is mounted, and axial passageways extending from opposite ends of the stem connect the metering chamber to a discharge location when the stem is in a discharge position and connect the metering chamber to a fluid reservoir when the stem is in a fill position.

EP0352915 discloses a unit dose liquid dispenser including a resilient metering reservoir disposed within a main reservoir in which a large supply of the liquid is maintained under pressure. Depression of an actuator to a dispensing position connects the metering chamber to the ambient while sealing it from the main reservoir resulting in the collapse of the metering reservoir and expulsion of the contents to the atmosphere at the pressure in the main reservoir.

According to a first aspect of the present invention there is provided a discharge assembly for discharging a metered volume of a liquid held in a pressured or pressurisable container, said assembly comprising
(i) an elongate tubular housing having a liquid inlet at a first end thereof,
(ii) a valve stem having a body locating within said housing and having a portion projecting from the second end of said housing, said valve stem being axially moveable relative to the housing between a first limit portion at which the assembly is closed to liquid discharge and a second limit position for discharge of the metered volume,
(iii) a chamber provided within the body of the valve stem and having a liquid inlet at a first end of the chamber adjacent said first end of the housing and a first fluid transfer passageway towards the opposite, second end of the chamber, said first fluid transfer passageway providing communication between the chamber and the exterior of the valve stem, and
(iv) a liquid discharge element moveable along said chamber from a liquid primed position to a liquid discharged position to effect discharge of the metered volume of liquid,
wherein
(a) the exterior of the body of the valve stem and the interior of the housing are configured such that in the first position of the valve stem there is second fluid transfer passageway along the outside of the valve stem between the inlet of the housing and said first fluid transfer passageway, and
(b) a seal is provided for relative sliding movement onto a seat as the valve stem moves from its first to second position to close said second fluid transfer passageway to fluid flow,
wherein the liquid discharge element is spherical.

According to a second aspect of the present invention there is provided a discharge assembly in accordance with the first aspect of the invention, further comprising a pressurised or pressurisable container, for discharging a metered volume of a liquid held in the pressurised container.

According to a third aspect of the present invention there is provided a liquid dispensing apparatus with a discharge assembly for discharging a metered volume of a liquid held in a pressurised container of the apparatus wherein the apparatus has a metering chamber incorporating a liquid discharge element which is moveable by fluid pressure from the container from a liquid primed position to a liquid discharged position to effect discharge of said metered volume of liquid and is moveable by a returning force from its liquid discharged position to its liquid primed position.

It will be appreciated that the liquid discharge assembly of the first aspect of the invention is particularly suitable for use in the liquid dispensing apparatus as defined in the third aspect of the present invention. Therefore according to a preferred embodiment of the first aspect of the invention, there is provided a liquid dispensing apparatus with a discharge assembly for discharging a metered volume of a liquid held in a pressurised container of the apparatus wherein the apparatus has a metering chamber incorporating a liquid discharge element which is moveable by fluid pressure from the container from a liquid primed position to a liquid discharged position to effect discharge of said metered volume of liquid and is moveable by a returning force from its liquid discharged position to its liquid primed position wherein the discharge assembly is in accordance with the first aspect of the present invention.

In accordance with the invention therefore a metered volume of a liquid is dispensed from the apparatus by means of a liquid discharge element which is moved along a metering chamber (to affect the discharge) by the pressure within the container. Advantageously, the present invention provides compressed gas propelled liquid dispensing apparatus that delivers uniform metered volumes of liquid propellant over lifetime, is inexpensive to manufacture, is manufacturable within narrow performance tolerances with high manufacturing yield, and has componentry resistant to the effects of ageing over product lifetime. Further, the present invention produces a high quality liquid aerosol without requiring a gas bleed from the aerosol container, thereby substantially maintaining aerosol spray performance throughout operational lifetime.

The apparatus in accordance with the invention is preferably in the form of an aerosol spray device.

The liquid discharge element employed in the liquid dispensing apparatus of the invention is preferably rigid to ensure that a known volume of liquid is dispensed without possible fluctuation in volumes as between successive discharges due to flexibility of the liquid discharge element.

In preferred constructions of apparatus in accordance with the invention, the apparatus is configured such that movement of the liquid discharge element from its liquid primed position in the metering chamber to its liquid discharged position is effected against the returning force. In other words, the returning force is applied during discharge of the apparatus and not only during recharging thereof. Conveniently the returning force is provided by virtue of the liquid discharge element being negatively buoyant in the liquid to be dispensed so that it has a tendency to "sink" within the metering chamber. The liquid discharge element may, for example, be of a metal such as stainless steel. Alternatively it may be of a synthetic polymeric material which is appropriately weighted (e.g. by means of metal inserts or by the incorporation therein of a densifying agent). Alternatively or additionally, the returning force may be provided by a spring.

The metering chamber is provided within the valve stem with the liquid discharge element being moveable along an interior surface of the metering chamber. The liquid discharge element is in the form of a piston which is spherical. If the apparatus is to be used for metering accurate volumes (e.g. for medical purposes) then the liquid discharge element may be sealed against the valve stem and/or against the inner wall of the metering chamber. Preferably, the clearance between the liquid discharge element and the metering chamber is sufficient to create a seal between the liquid discharge element and the metering chamber, but not too small that the travel of the liquid discharge element between the first and second limit position is significantly impeded by friction with the wall of the metering chamber.

A particular advantage of a sphere being the liquid discharge element as opposed to a cyclindrical piston is that a sufficient seal is created between the liquid discharge element and the metering chamber, but friction between the wall of the metering chamber and the sphere is minimised, thus allowing the sphere to travel more freely than a cylindrical piston for example. Also, the manufacturing tolerances for a cylindrical piston are higher than a sphere because the sphere can roll and rotate within the chamber more freely than the former.

Preferred constructions of apparatus in accordance with the invention will be such that the liquid discharge element has a first side exposed to the metering chamber and an opposite second side exposed to fluid pressure from the container. In such an arrangement, the metering chamber will be provided on the first side of the liquid discharge element with an inlet/outlet arrangement for introduction of liquid from the container into the metering chamber and for discharge of liquid from the metering chamber. In some embodiments of the invention, the inlet and the outlet may be separate of each other. However in other embodiments of the invention a single port may serve as both an inlet and an outlet.

Apparatus in accordance with the invention will incorporate an actuator assembly incorporating a valve stem in which for the movement from a first limit position to a second limit position is preferably against biasing means (e.g. a coil spring). The actuator assembly incorporates a valve stem. The actuator assembly may further incorporate an actuator cap.

The valve stem has a discharge conduit arrangement with an inlet through which liquid is introduced into the discharge conduit arrangement and an outlet from which liquid is discharged from the apparatus. Such an embodiment also incorporates a valving arrangement which is such that wherein the valve stem is in its first limit position liquid may flow into the metering chamber from the pressurised container through the inlet/outlet arrangement to effect charging of the metering chamber and may not flow out of the metering chamber through the inlet/outlet arrangement. Conversely when the valve stem is in its second limit position, liquid may flow out of the metering chamber to the discharge conduit through the inlet/outlet arrangement to effect discharging of the metering chamber and may not flow into the metering chamber through the inlet/outlet arrangement.

A pressure equalising channel may be provided in the exterior surface of the metering chamber to allow for equalisation of the pressure in the discharge conduit arrangement of the valve stem and that in the container when the valve stem is in the first limit position.

The valve stem may be rotatable about its axis between first and second rotary positions and wherein the apparatus is such that axial movement of the valve stem beyond its second limit position is prevented in the first rotary position of the valve stem but allowed in the second rotary position thereof to provide for filling and/or re-filling of the apparatus. Advantageously the requirement of such rotation of the axis to enable filling and/or re-filling of the apparatus prevents accidental depression of the valve stem into the filling position by the user during normal use.

Locating the metering chamber within the valve stem has the advantage of simplifying construction as compared to the case where the metering chamber is provided around the valve stem (around the periphery thereof). Advantageously such a metering chamber may be particularly suitable for providing an apparatus with a metering chamber having a small and accurate metered volume. The valve stem may be biased from the second limit position to the first limit position, preferably with a spring, most preferably a coil spring.

Preferably, a lower wall of the housing is provided with a depending spigot defining an inlet for the housing. Liquid from the pressurised container preferably enters the housing through this spigot. Preferably the spigot extends from a lower wall of the housing and is capable of engaging with at least a portion of the valve stem. Preferably the coil spring is located on the spigot such that when the valve stem is in the second limit position, the spring biases the valve stem towards the first position.

Preferably a seal is provided at the end of the housing from which a portion of the valve stem projects. Preferably the seal is an annular seal which seals around the circumference of the valve stem at the point at which it exits the housing. The seal is such that it allows relative slidable movement of the valve stem within the housing and between the first and second limit positions.

Preferably the metering chamber has a substantially cyclindrical cross section.

Preferably the liquid discharge element is spherical. Preferably the diameter of the liquid discharge element closely approximates that of the metering chamber, thereby providing a sealed or almost sealed contact with the internal circumference of the metering chamber.

Preferably the seal provided for relative sliding movement onto the seat is an annular seal. Preferably the seal is an O-ring. Preferably the O-ring is made of rubber or plastics material. Preferably the seal is at least partially recessed in an annular groove in the exterior of the body of the valve stem. Preferably the seal is provided on the exterior of the body of the valve stem and the seat is provided on the interior surface of the housing.

Preferably the seat is downwardly inclined away from the second end of the housing.

Preferably the liquid discharge element is moveable by a returning force from its liquid discharged position to its liquid primed position.

Preferably the liquid discharge element is negatively buoyant in the liquid to be dispensed so as to provide at least a part of said returning force.

Preferably the valve stem comprises a body portion and a narrower diameter head portion. The head portion is preferably encircled at its base by a shoulder defined at the upper end of the body. The head portion is preferably moveable within an annular seal provided at the second end of the housing. Preferably the head portion has a third fluid transfer passageway communicating with an outlet of the head portion, said third transfer passageway being external of the housing in the first position of the valve stem and within the housing in the second position thereof. Preferably the inlet to the housing is coaxial with the chamber.

Preferably the discharge assembly of the invention is such that with the valve stem in its second limit position and the discharge element at its liquid primed position there is a refill flow passageway arrangement between the liquid inlet of the housing and the chamber provided within the body of the valve stem to permit re-filling of a container on which the discharge assembly is mounted in use. Preferably the discharge assembly comprises a tubular projection within the elongate tubular housing around the liquid inlet thereof, and the refill passageway arrangement is provided by at least one passageway in the wall of said tubular projection and at least one passageway in the wall of the chamber accessible to fluid when the discharge element is at its liquid primed position.

Alternatively or additionally, the chamber may be provided with a bore having differential diameters along its length. A first diameter of bore is provided which closely approximates the diameter of the liquid discharge element so as to provide a seal between the chamber and the liquid discharge element. A second diameter, larger than the first diameter, may also be provided with which the liquid discharge element does not form a seal. This allows fluid to flow around the liquid discharge element (particularly in the embodiment where the liquid discharge element is a ball) when the liquid discharge element is at the position of the larger diameter bore. Preferably, the larger diameter bore is present along a portion of the length of the chamber, and is bounded on either side by the first diameter bore.

Preferably the apparatus of the present invention comprises:
(i) an actuator assembly incorporating a valve stem adapted for movement from a first limit position to a second limit position, said valve stem having a discharge conduit arrangement with an inlet through which liquid is introduced into the discharge conduit arrangement and an outlet from which liquid is discharged from the apparatus, and
(ii) a valving arrangement such that when the valve stem is in its first limit position liquid may not flow out of the metering chamber through the inlet/outlet arrangement into the discharge conduit and when the valve stem is in its second limit position liquid may flow out of the metering chamber through the inlet/outlet arrangement into the discharge conduit.

In this embodiment, the discharge assembly preferably comprises a housing and wherein
(i) an annular space is provided between the inner surface of the housing and the outer surface of the valve stem, and
(ii) the metering chamber comprising the liquid discharge element is provided internally to the valve stem.

In this embodiment, the discharge assembly preferably comprises the following features:
(i) the housing is an elongate tubular housing having a liquid inlet at a first end thereof,
(ii) the valve stem has a body locating within said housing and having a portion projecting from the second end of said housing,
(iii) the metering chamber has a liquid inlet at a first end of the chamber adjacent said first end of the housing and a first fluid transfer passageway towards the opposite, second end of the chamber, said first fluid transfer passageway providing communication between the chamber and the exterior of the valve stem,
(iv) the exterior of the body of the valve stem and the interior of the housing are configured such that in the first position of the valve stem there is second fluid transfer passageway along the outside of the valve stem between the inlet of the housing and said first fluid transfer passageway, and
(v) the valving arrangement comprises a seal provided for relative sliding movement onto a seat as the valve stem moves from its first to second position to close said second fluid transfer passageway to fluid flow.

The invention will be further described by way of example only with reference to the accompanying drawings, in which:
Figs 1A and 1B show one embodiment of discharge assembly in successive stages of operation in accordance with the first aspect of the invention.
Figs 2A, 2B and 2C show a further embodiment of discharge assembly in successive stages of operation in accordance with the first aspect of the invention.

In the following description, references to "upper" and "lower" are to the embodiments of apparatus as illustrated in the drawings which are represented in their normal operational positions. In the following description, the "rest" condition is that in which the apparatus is primed and ready to emit a metered volume, with the valve stem in the uppermost position and the piston in the lower limit position.

In the following description, references to the valve stem being in the uppermost and lowermost positions correspond respectively with references to the valve stem being in first and second limit positions. References to the valve stem being in the depressed position correspond with references to the valve stem being in the lowermost position. References to piston correspond with references to liquid discharge element. References to the lower and upper limit positions correspond respectively with references to liquid primed and liquid discharged positions.

It should be appreciated that other than substantially insoluble compressed gas propellants, liquefied gas propellants may be used in the embodiments of the invention.

It will be appreciated that the liquid discharge assembly according to the first aspect of the invention is particularly suitable for use in the liquid dispensing apparatus as generally defined herein. Therefore according to a further aspect of the present invention there is provided a liquid dispensing apparatus with a discharge assembly for discharging a metered volume of a liquid held in a pressurised or pressurisable container of the apparatus wherein the apparatus has a metering chamber incorporating a liquid discharge element which is moveable by fluid pressure from the container from a liquid primed position to a liquid discharged position to effect discharge of said metered volume of liquid and is moveable by a returning force from its liquid discharged position to its liquid primed position wherein the discharge assembly is in accordance with the first aspect of the present invention.

Preferred features of the discharge assembly of the first aspect of the present invention are defined in the claims of the present specification which will be understood from a consideration of the subsequent description of this specification.

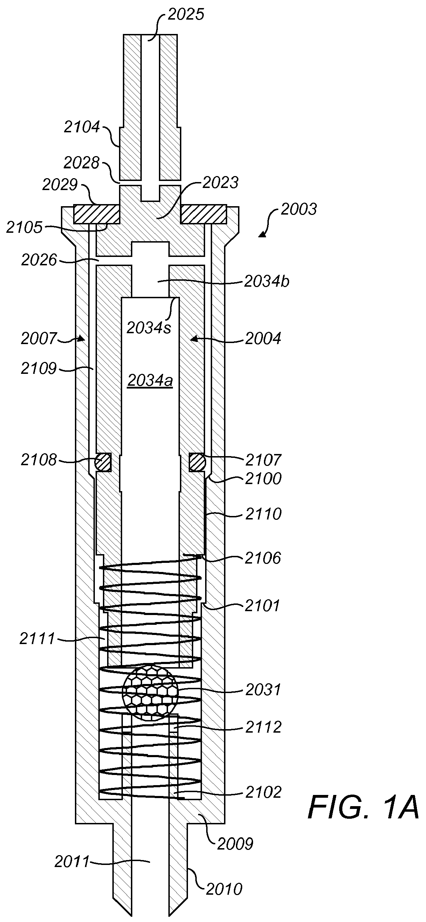

Referring now to Fig 1A, there is shown therein an embodiment of discharge (or metering valve) assembly 2003 in accordance with the first aspect of the invention and in its rest condition.

The metering valve assembly 2003 comprises a housing 2007 within which valve stem 2004 is located. Housing 2007 is generally tubular and has an inner surface that is stepped at two positions along its length. More particularly, the inner surface of housing 2007 has a downwardly inclined, annular step 2100 and a right angled step 2101 further down towards the wall 2009 at the lower end of the housing.

Lower wall 2009 is provided with a depending spigot 2010 defining an inlet 2011 for the housing 2007. Spigot 2010 may optionally have an enlarged lower end (not shown) on which is located the upper end of a dip-tube (not shown) that extends to the lower region of a container (not shown) onto which the metering valve assembly 2003 is mounted in use. An upstanding tubular spigot 2102 encircles the inlet 2011 and projects upwardly into the interior of the housing 2007.

Valve stem 2004 comprises a body portion 2103 and a narrower diameter head portion 2104 encircled at its base by a shoulder 2105 defined at the upper end of body 2103. At the junction of body portion 2103 and head portion 2104 is a partition wall 2023 which separates an upper, open-topped conduit 2025 (in head portion 2104) from lower chambers 2034a and 2034b provided in body portion 2103. As shown, chamber 2034b is the upper of these two chambers and of lesser diameter whereby a shoulder 2034s is defined in going from chamber 2034a to 2034b.

Over the majority of its length, body portion 2103 of valve stem 2004 has an outer diameter marginally less than the inner diameter of housing 2007 in the region thereof between steps 2100 and 2101. In its lower region, body portion 2103 is stepped inwardly as at 2106.

Valve stem 2004 is provided with two sets of fluid transfer passageways, one set extending radially outwardly from the discharge conduit 2025 and the other set radially outwardly from chamber 2034b. More particularly, in its upper region, the body 2103 (of the valve stem 2004) is formed with first fluid transfer passageways 2026 and a lower region of the head portion 2104 is formed with second fluid transfer passageways 2028.

Additionally, body portion 2103 (of the valve stem 2004) is formed with an annular groove 2107 in which locates an O-ring 2108. The external diameter of O-ring 2108 is less than the internal diameter of housing 2007 above step 2100 but slightly greater than the internal diameter below step 2100.

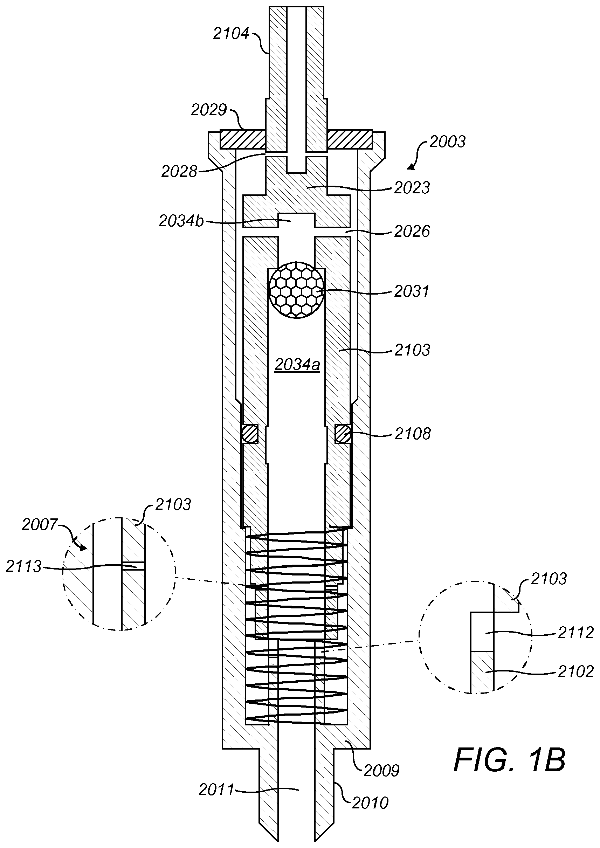

As shown in Figs 1A and 1B, valve stem 2004 is located with its body 2103 within housing 2007 and its head 2104 projecting beyond an annular seal 2029 which is provided at the upper end of housing 2007 and seals against the external surface of the head 2104. As further shown in the drawings, the body 2103 of valve stem 2004 sub-divides the interior volume of housing 2007 into a first annular region 2109 above step 2100, a narrower second annular region 2110 between steps 2100 and 2101 and a third annular region 2111 below step 2101.

Valve stem 2004 is of a length such that, when the metering assembly 2003 is in its rest condition (as shown in Fig 1 A) the lower end of valve stem 2004 locates above the upper end of spigot 2102. A coil spring 2002 provided around spigot 2102 and around the lower end of valve stem 2004 serves to bias the latter to its upper position.

A ball 2031, which is negatively buoyant relative to liquid held within a container for discharge by the assembly 2003 is provided as shown. Ball 2031 has a diameter greater than the internal diameter of tubular spigot 2102 but such as to locate with minimal clearance within lower chamber 2034a of valve stem 2004. In the rest condition of the assembly 2003 (see Fig 1A), ball 2031 rests on the upper end of tubular spigot 2102 with its upper surface lying just within the lower end of chamber 2034a.

With the arrangement as described, ball 2031 is capable of travel between a lower limit position (defined by the upper end of tubular spigot 2102) and an upper limit position at shoulder 2034s. Accordingly the lower chamber 2034a provides a metering chamber within which ball 2031 is able to move from its lower to upper limit position to sweep out a metered volume.

Further features of the illustrated embodiment are cut-away portions 2112 at the upper end (as seen in Figs 1A and 1B) of the spigot 2102 and slots 2113 or other passageways for providing fluid flow radially through the wall towards the lower end of the body portion 2102. More particularly, the slots 2113 (or other passageways) are provided at a level such that with the valve stem 2004 in the depressed position (Fig 1 B) and the ball 2031 seated on the spigot 2102, fluid is able to flow radially outwardly of the body 2013 of valve stem 2004 for the reasons described more fully below.

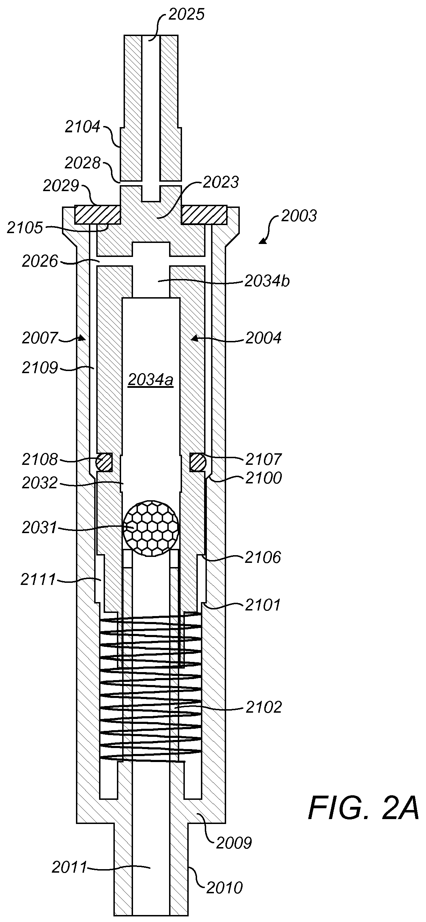

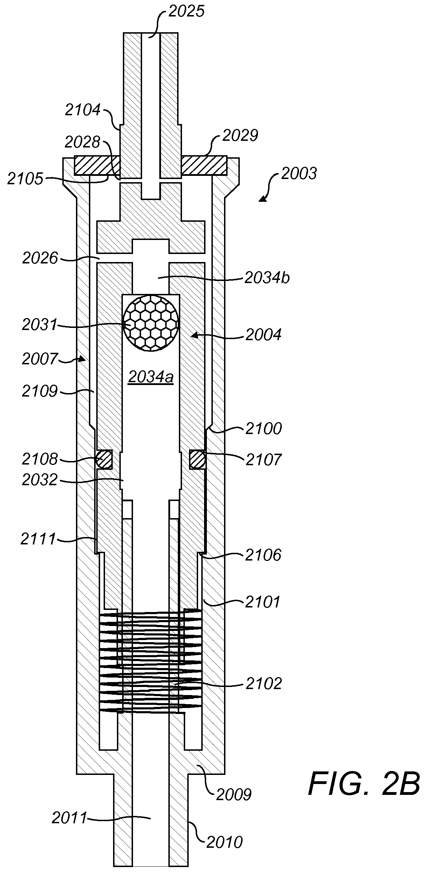

Fig 2A and 2B shows a similar embodiment to that shown in Figs 1A and 1B. In this embodiment, valve stem 2004 is of a length such that, when the metering assembly 2003 is in its rest condition (as shown in Fig 2A) the lower end of valve stem 2004 locates below the upper end of spigot 2102. The spigot can be slidably inserted into the lower end of valve stem 2004. A coil spring 2002 provided around spigot 2102 and around the lower end of valve stem 2004 serves to bias the latter to its upper position.

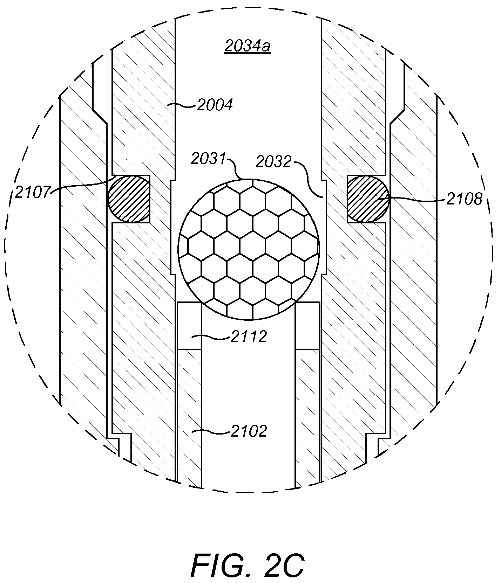

Furthermore, Figs 2A and 2B shows that the wall of the chamber 2034a has an annular groove 2032 which has a greater diameter than the rest of the chamber. This is shown in greater detail in Fig 2C. Fig 2C shows that how the annular grove 2032 facilitates refilling of the apparatus. Firstly, the valve stem 2004 is depressed so as to be in the position shown in Fig 2B. It can then be depressed past this position (for example by rotating the valve stem to a predetermined position) and depressed further such that the upper end of the spigot 2102 will hold the ball 2031 adjacent to the annular groove (as shown in Fig 2C). Secondly, a pressurised source of liquid and/or propellant gas (as the case may be) is connected to (what would normally be) the outlet end of valve stem 2004. As a result, the refill liquid and/or propellant gas passes along discharge conduit 2025, radially outwardly through the second fluid transfer passageways 2028 into the annular region 2109 before passing radially inwardly through passageways 2026. The fluid pressure causes the ball 2031 to move to the position shown in Fig 2C. The pressurised refill liquid and/or propellant gas passes along chamber 2034a, past the ball 2031 at the annular groove, and then radially through the slots 2112 so it may pass into the container through the passageway.

With regard to the embodiment shown in 2A-2C, the clearance between the outer diameter of the spigot 2102 and the inner wall of the metering chamber 2034a is sufficient to allow a flow of fluid from the metering chamber 2034a to the annular space 2111, and hence provide fluid communication between the metering chamber 2034a and the fluid flow transfer passageways 2026 when the ball 2031 is in the liquid discharged position as shown in Fig 2B. This permits equalization of the pressure between the pressurised container and the upper chamber 2034b, thus facilitating the movement of the ball 2031 back towards the spigot 2102.

Operation of the illustrated device according to Figs 1A and 1B is as follows.

In the "rest" condition illustrated in Fig 1A, the ball 2031 is at its lower limit position and the metering valve assembly 2003 is filled with liquid up to the level of seal 2029. Once valve stem 2004 is depressed, the fluid transfer passageways 2028 move downwardly past the seal 2029 so as to be open to fluid flow from within the housing 2007. Additionally O-ring 2108 now acts against the inner surface of second annular region 2110 so as to prevent fluid flow from the inlet 2011 into the first annular region 2109. Ball 2031 is now forced upwardly by fluid pressure so that it moves from its lower limit position (shown in Fig 1 A) to its upper limit position (shown in Fig 1B) and in doing so causes a metered volume of liquid to be transferred radially outwardly through fluid flow transfer passageways 2026 and then radially inwardly through fluid flow transfer passageways 2028 for discharge by the assembly. Once the valve stem 2004 is released and it returns to its uppermost position under the action of spring 2022, the fluid transfer passageway 2008 again become closed to fluid flow (by virtue of locating above seal 2029) but liquid is now able to pass from the inlet 2011 of the housing along the annular regions 2109, 2110 and 2111 to reach the fluid transfer passageways 2026. This liquid is able to pass radially inwardly along fluid transfer passageways 2026 above the level of ball 2031, which will now move downwardly to its lower limit position so that chamber 2034a is primed for a further discharge of a metered volume of liquid.

Once the container on which the spray discharge assembly is mounted has been depleted of liquid and gas it may be refilled in the following manner. Firstly, the valve stem 2004 is depressed so as to be in the position shown in Fig 1B. Secondly, a pressurised source of liquid and/or propellant gas (as the case may be) is connected to (what would normally be) the outlet end of valve stem 2004. As a result, the refill liquid and/or propellant gas passes along discharge conduit 2025, radially outwardly through the second fluid transfer passageways 2028 into the annular region 2109 before passing radially inwardly through passageways 2026. If the ball 2031 is not already seated on spigot 2031, the fluid pressure causes it to move to this position. The pressurised refill liquid and/or propellant gas passes along chamber 2034a and then radially outwardly through the slots 2113 and subsequently radially inwardly through the cut-away portions 2112 so it may pass into the container through the passageway.

It will be appreciated that the device shown in Figs 2A-2C works analogously to Figs 1A and 1B. The principal difference is that pressure equalization between the pressurised container and the upper chamber 2034b is facilitated by the fluid being able to move between the interface of the outer surface of the spigot 2102 and the inner surface of the metering chamber 2034a. This may be achieved by providing adequate clearance between the outer diameter of the spigot 2102 and the inner diameter of the metering chamber 2034a. This may be alternatively or additionally achieved by providing grooves in the outer surface of the spigot 2102 which provide one or more conduits which run between the metering chamber 2034a and the annular regions 2111.

The apparatus of the present invention may be used as an aerosol spraying device. Such a device may be used to deliver various materials, preferably materials dissolved or dispersed in water. For example, the liquid in the container may contain a range of materials selected from the group consisting of pharmaceutical, agrochemical, fragrance, air freshener, odour neutraliser, sanitizing agent, depilatory chemical (such as calcium thioglycolate), epilatory chemical, cosmetic agent, deodorant, anti-perspirant, anti-bacterial agents, anti-allergenic compounds, and mixtures of two or more thereof. Furthermore, the container may contain a foamable composition, optionally containing any of the materials disclosed immediately hereinbefore. The water in the container may optionally contain one or more organic solvents or dispersants in order to aid dissolution or dispersion of the materials in the water.

The apparatus of the present invention may be used with an apparatus having a dispensing mechanism which turns on and off periodically. This may be automated.

For example, the apparatus of the present invention may be used to provide an air treatment agent to an air treatment device comprising: an airborne agent detector comprising one or more airborne agent sensors, wherein the airborne agent detector comprises means to detect a threshold level or concentration of an airborne agent; a means to mount the apparatus of the present invention (including the pressurised container where present) to the device; and a means to expel a portion of air treatment agent from the apparatus of the present invention, upon detection of an airborne agent by the detector. Such an air treatment device (not including the apparatus of the present invention) is disclosed in WO 2005/018690 for example. Alternatively, the apparatus of the present invention may be used to dispense a composition from a spraying device as disclosed in WO 2007/045826.

## Claims

1. A discharge assembly (2003) for discharging a metered volume of a liquid held in a pressurised or pressurisable container, said assembly comprising
(i) an elongate tubular housing (2007) having a liquid inlet (2011) at a first end thereof,
(ii) a valve stem (2004) having a body (2103) locating within said housing (2007) and having a portion (2104) projecting from the second end of said housing, said valve stem being axially moveable relative to the housing between a first limit portion at which the assembly is closed to liquid discharge and a second limit position for discharge of the metered volume,
(iii) a chamber (2034) provided within the body of the valve stem and having a liquid inlet at a first end of the chamber adjacent said first end of the housing and a first fluid transfer passageway (2026) towards the opposite, second end of the chamber, said first fluid transfer passageway providing communication between the chamber and the exterior of the valve stem, and
(iv) a liquid discharge element (2031) moveable along said chamber from a liquid primed position to a liquid discharged position to effect discharge of the metered volume of liquid,
wherein
(a) the exterior of the body of the valve stem and the interior of the housing are configured such that in the first position of the valve stem there is second fluid transfer passageway (2028) along the outside of the valve stem between the inlet of the housing and said first fluid transfer passageway, and
(b) a seal (2108) is provided for relative sliding movement onto a seat (2100) as the valve stem moves from its first to second position to close said second fluid transfer passageway (2028) to fluid flow, **characterised in that** the liquid discharge element (2031) is spherical.

2. A discharge assembly as claimed in claim 1 wherein the seal (2108) is provided on the exterior of the body of the valve stem and the seat (2100) is provided on the interior surface of the housing, preferably wherein the seal is an O-ring, and preferably wherein the seat is downwardly inclined away from the second end of the housing.

3. A discharge assembly as claimed in any one of claims 1 or 2 wherein the liquid discharge element (2031) is moveable by a returning force from its liquid discharged position to its liquid primed position, preferably wherein the liquid discharge element is negatively buoyant in the liquid to be dispensed so as to provide at least a part of said returning force.

4. A discharge assembly as claimed in any one of claims 1 to 3 wherein the liquid discharge element (2031) is of metal, preferably stainless steel, or is a weighted synthetic polymeric material.

5. A discharge assembly as claimed in any one of claims 1 to 4 wherein the head portion (2104) is moveable within an annular seal (2029) provided at the second end of the housing and said head portion has a third fluid transfer passageway communicating with an outlet of the head portion, said third transfer passageway being external of the housing in the first position of the valve stem and within the housing in the second position thereof.

6. A discharge assembly as claimed in any one of claims 1 to 5 wherein the inlet to the housing is coaxial with said chamber.

7. A discharge assembly as claimed in any one of claims 1 to 6 which is such that with the valve stem in its second limit position and the discharge element at its liquid primed position there is a refill flow passageway arrangement between the liquid inlet of the housing and the chamber provided within the body of the valve stem to permit re-filling of a container on which the discharge assembly is mounted in use.

8. A discharge assembly as claimed in claim 7 when dependent from claim 6 wherein
(a) a tubular projection (2102) is provided within the elongate tubular housing around the liquid inlet (2011) thereof, and
(b) said refill passageway arrangement is provided by at least one passageway in the wall of said tubular projection and at least one passageway in the wall of the chamber accessible to fluid when the discharge element is at its liquid primed position.

9. A liquid dispensing apparatus provided with a discharge assembly as claimed in any one of claims 1 to 8 for discharging a metered volume of a liquid held in a pressurised or pressurisable container of the apparatus.

10. A liquid dispensing apparatus with a discharge assembly (2003) for discharging a metered volume of a liquid held in a pressurised container of the apparatus wherein the apparatus has a metering chamber (2034) incorporating a liquid discharge element (2031) which is moveable by fluid pressure from the container from a liquid primed position to a liquid discharged position to effect discharge of said metered volume of liquid and is moveable by a returning force from its liquid discharged position to its liquid primed position wherein the discharge assembly is as claimed in any one of claims 1 to 8.

11. A liquid dispensing apparatus as claimed in any one of claims 9 or 10 which is an aerosol spraying device, preferably which contains a pharmaceutical composition, a fragrance composition, an odour neutralizer composition, a depilatory composition, or an insecticide composition.

12. A liquid dispensing apparatus as claimed in any one of claims 9 to 11 which contains a material selected from the group consisting of pharmaceutical, agrochemical, fragrance, air freshener, odour neutraliser, sanitizing agent, polish, insecticide, depilatory chemical (such as calcium thioglycolate), epilatory chemical, cosmetic agent, deodorant, anti-perspirant, anti-bacterial agents, anti-allergenic compounds, and mixtures of two or more thereof.

13. A liquid dispensing apparatus as claimed in any one of claims 9 to 11 which contains a foamable composition, optionally containing any of the components defined in claim 11.

14. A metered dose pharmaceutical inhaler comprising a discharge assembly as claimed in any one of claims 1 to 8 for discharging a metered volume of a pharmaceutical composition held in a pressurised or pressurisable container of the apparatus.

## Patentansprüche

1. Abgabeanordnung (2003) zum Abgeben eines gemessenen Volumens einer Flüssigkeit, die in einem unter Druck stehenden oder druckbeaufschlagbaren Behälter gehalten wird, wobei die genannte Anordnung umfasst:
(i) ein längliches rohrförmiges Gehäuse (2007) mit einem Flüssigkeitseinlass (2011) an einem ersten Ende davon,
(ii) einen Ventilschaft (2004) mit einem Körper (2103), der innerhalb des genannten Gehäuses (2007) positioniert ist und einen Abschnitt (2104) aufweist, der aus dem zweiten Ende des genannten Gehäuses hervorsteht, wobei der genannte Ventilschaft relativ zum Gehäuse zwischen einem ersten Begrenzungsabschnitt, bei dem die Anordnung bezüglich Flüssigkeitsabgabe geschlossen ist und einer zweiten Begrenzungsposition zur Abgabe des gemessenen Volumens axial beweglich ist,
(iii) eine Kammer (2034), die innerhalb des Ventilschaftkörpers bereitgestellt ist und einen Flüssigkeitseinlass an einem ersten Ende der Kammer angrenzend an das genannte erste Ende des Gehäuses und einen ersten Durchgang (2026) für Flüssigkeitsübertragung in Richtung des entgegengesetzten, zweiten Endes der Kammer aufweist, wobei der genannte erste Durchgang für Flüssigkeitsübertragung Verbindung zwischen der Kammer und des Äußeren des Ventilschafts bereitstellt, und
(iv) ein Flüssigkeitsabgabeelement (2031), das entlang der genannten Kammer aus einer betriebsbereiten Position für die Flüssigkeit in eine Position für abgegebene Flüssigkeit beweglich ist, um die Abgabe des gemessenen Volumens von Flüssigkeit zu bewirken,
wobei
(a) die Außenseite des Ventilschaftkörpers und das Innere des Gehäuses derart konfiguriert sind, dass sich in der ersten Position des Ventilschafts ein zweiter Durchgang (2028) für Flüssigkeitsübertragung entlang der Außenseite des Ventilschafts zwischen dem Einlass des Gehäuses und dem ersten Durchgang für Flüssigkeitsübertragung befindet, und
(b) eine Dichtung (2108) für relative Gleitbewegung auf einen Sitz (2100) bereitgestellt ist, sowie sich der Ventilschaft aus seiner ersten in die zweite Position bewegt, um den genannten zweiten Durchgang (2028) für Flüssigkeitsübertragung gegenüber Flüssigkeitsfluss zu schließen,
**dadurch gekennzeichnet, dass** das Flüssigkeitsabgabeelement (2031) sphärisch ist.

2. Abgabeanordnung wie in Anspruch 1 beansprucht, wobei die Dichtung (2108) auf der Außenseite des Ventilschaftkörpers bereitgestellt ist und der Sitz (2100) auf der Innenfläche des Gehäuses bereitgestellt ist, vorzugsweise, wobei die Dichtung ein O-Ring ist, und vorzugsweise, wobei der Sitz abwärts vom zweiten Ende des Gehäuses weg geneigt ist.

3. Abgabeanordnung wie in irgendeinem der Ansprüche 1 oder 2 beansprucht, wobei das Flüssigkeitsabgabeelement (2031) durch eine Rückstellkraft aus seiner Flüssigkeit abgegebenen Position in seine betriebsbereite Position für die Flüssigkeit beweglich ist, vorzugsweise, wobei das Flüssigkeitsabgabeelement in der zu spendierenden Flüssigkeit negativen Auftrieb hat, um wenigstens einen Teil der genannten Rückstellkraft bereitzustellen.

4. Abgabeanordnung wie in irgendeinem der Ansprüche 1 bis 3 beansprucht, wobei das Flüssigkeitsabgabeelement (2031) aus Metall, vorzugsweise Edelstahl ist oder ein gewichtetes synthetisches Polymermaterial ist.

5. Abgabeanordnung wie in irgendeinem der Ansprüche 1 bis 4 beansprucht, wobei der Kopfabschnitt (2104) innerhalb einer ringförmigen Dichtung (2029) beweglich ist, die am zweiten Ende des Gehäuses bereitgestellt ist und der genannte Kopfabschnitt einen dritten Durchgang für Flüssigkeitsübertragung aufweist, der mit einem Auslass des Kopfabschnitts in Verbindung steht, wobei der genannte dritte Übertragungsdurchgang extern des Gehäuses in der ersten Position des Ventilschafts und innerhalb des Gehäuses in der zweiten Position davon ist.

6. Abgabeanordnung wie in irgendeinem der Ansprüche 1 bis 5 beansprucht, wobei der Einlass in das Gehäuse koaxial mit der genannten Kammer ist.

7. Abgabeanordnung wie in irgendeinem der Ansprüche 1 bis 6 beansprucht, die derart ist, dass mit dem Ventilschaft in seiner zweiten Begrenzungsposition befindlich und das Abgabeelement in seiner betriebsbereiten Position für Flüssigkeit befindlich, eine Flussdurchgangsanordnung zum Nachfüllen zwischen dem Flüssigkeitseinlass des Gehäuses vorhanden ist und die Kammer mit dem Ventilschaftkörper versehen ist, um Nachfüllen eines Behälters zu gestatten, auf dem die Abgabeanordnung im Gebrauch montiert ist.

8. Abgabeanordnung wie in Anspruch 7 beansprucht, wenn von Anspruch 6 abhängig, wobei
(a) ein rohrförmiger Vorsprung (2102) innerhalb des länglichen rohrförmigen Gehäuses um den Flüssigkeitseinlass (2011) davon bereitgestellt ist, und
(b) die genannte Durchgangsanordnung zum Nachfüllen durch wenigstens einen Durchgang in der Wand des genannten rohrförmigen Vorsprungs bereitgestellt wird und wenigstens ein Durchgang in der Wand der Kammer für Flüssigkeit zugänglich ist, wenn sich das Abgabeelement in seiner betriebsbereiten Position für die Flüssigkeit befindet.

9. Flüssigkeitsspender, der mit einer Abgabeanordnung wie in irgendeinem der Ansprüche 1 bis 8 beansprucht zum Abgeben eines gemessenen Volumens einer Flüssigkeit versehen ist, die in einem unter Druck stehenden oder druckbeaufschlagbaren Behälter der Vorrichtung gehalten wird.

10. Flüssigkeitsspender mit einer Abgabeanordnung (2003) zum Abgeben eines dosierten Volumens einer Flüssigkeit, die in einem unter Druck stehendem Behälter der Vorrichtung gehalten wird, wobei die Vorrichtung eine Dosierkammer (2034) aufweist, die ein Flüssigkeitsabgabeelement (2031) enthält, das durch Flüssigkeitsdruck seitens des Behälters aus einer betriebsbereiten Position für Flüssigkeit in eine Position für abgegebene Flüssigkeit beweglich ist, um die Abgabe des genannten dosierten Flüssigkeitsvolumens zu bewirken, und durch eine Rückstellkraft aus seiner Position für abgegebene Flüssigkeit in seine Position für betriebsbereite Flüssigkeit beweglich ist, wobei die Abgabeanordnung wie in irgendeinem der Ansprüche 1 bis 8 ist.

11. Flüssigkeitsspender wie in irgendeinem der Ansprüche 9 oder 10 beansprucht, der eine Aerosol-Sprühvorrichtung ist, die vorzugsweise eine pharmazeutische Zusammensetzung, eine Duftzusammensetzung, eine geruchsneutralisierende Zusammensetzung, eine Enthaarungszusammensetzung oder eine insektizide Zusammensetzung enthält.

12. Flüssigkeitsspender wie in irgendeinem der Ansprüche 9 bis 11 beansprucht, der ein Material enthält, das aus der Gruppe selektiert wurde, die aus pharmazeutischen, agrochemischen, Duft-, Lufterfrischer-, Geruchsneutralisier-, Desinfektionsmittel, Polier-, Insektizid-, Enthaarungschemikalie (wie beispielsweise Calciumthioglycolat), Epilierchemikalie, Kosmetikmittel, Deodorant-, Antiperspirant-, antibakterielle Mittel, antiallergische Zusammensetzungen und Mischungen von zwei oder mehreren davon.

13. Flüssigkeitsspender wie in irgendeinem der Ansprüche 9 bis 11 beansprucht, der eine schaumbildende Zusammensetzung enthält, die optional irgendwelche der in Anspruch 11 definierten Komponenten enthält.

14. Pharmazeutischer Inhalator gemessener Dosis, der eine Abgabeanordnung, wie in irgendeinem der Ansprüche 1 bis 8 beansprucht, zum Abgeben eines dosierten Volumens einer pharmazeutischen Zusammensetzung umfasst, die in einem unter Druck stehenden oder druckbeaufschlagbaren Behälter der Vorrichtung gehalten wird.

## Revendications

1. Unité de décharge (2003) servant à décharger un volume dosé de liiquide contenu dans un récipient pressurisé ou capable de l'être, l'unité comprenant:
(i) un boîter tubulaire allongé (2007) comportant une admission de liquide (2011) à sa première extrémité,
(ii) une tige de soupape (2004) dont le corps (2103) s'encastre dans le boîter tubulaire (2007) et dont une partie fait saillie à partir de la deuxième extrémité du boîter, la tige de soupape pouvant être déplacée axialement par rapport au boîtier entre une première partie limite où l'unité est fermée, empêchant ainsi la décharge du liquide, et une deuxième partie limite qui assure la décharge du volume dosé,
(iiii) une chambre (2034) prévue dans le corps de la tige de soupape et comportant une admission de liquide à une première extrémité de la chambre près de la première extrémité du boîtier ainsi qu'un premier passage de transfert du fluide (2026) vers la deuxième extrémité de la chambre, qui est l'extrémité opposée, le premier passage de transfert du fluide assurant la communication entre la chambre et la partie extérieure de la tige de soupape; et
(iv) un élément de décharge du liquide (2031) qui peut être déplacé le long de la chambre entre une position d'amorçage du liquide et une position de décharge du liquide, afin d'assurer la décharge du volume dosé de liquide,
**caractérisé en ce que**
(a) la partie extérieure du corps de la tige de soupape et la partie intérieure du boîtier sont configurées de manière à ce que, dans la première position de la tige de soupape, il est prévu un deuxième passage de transfert du fluide (2028) le long de l'extérieur de la tige de soupape entre l'admission du boîtier et le premier passage de transfert du fluide, et **en ce qu'**iil est prévu
(b) un joint d'étanchéité (2108) pour le mouvement de glissement relatif sur un siège (2100) alors que la tige de soupape se déplace entre ses première et deuxième positions pour obturer le deuxième passage de transfert du fluide (2028) et empêcher le fluide de s'écouler.
**caractérisé en ce que** l'élément de décharge de liquide (2031) est sphérique.

2. Unité de décharge selon la revendication 1, **caractérisée en ce que** le joint d'étanchéité (2108) est prévu à l'extérieur du corprs de la tige de soupape et **en ce que** le siège (2100) est prévu sur la surface intérieure du boîtier, caractérisée de préférence **en ce que** le joint d'étanchéité est un joint torique, et **en ce que** le siège est incliné vers le bas dans le sens contraire à celui de la deuxième extrémité du boîtier.

3. Unité de décharge selon l'une quelconque des revendications 1 ou 2, **caractérisée en ce que** l'élément de décharge de liquide (2031) peut être déplacé par une force de retour entre sa position de décharge du liquide et sa position d'amorçage du liquide, de préférence **caractérisé en ce que** l'élément de décharge du liquide est négativement flottant dans le liquide qui va être distribué de façon à fournir au moins une partie de la force de retour.

4. Unité de décharge selon l'une quelconque des revendications 1 à 3, **caractérisée en ce que** l'élément de distribution du liquide (2031) est fabriqué en méta, de préférencce en acier inoxydable ou en matière synthéqiue polymérique.

5. Unité de décharge selon l'une quelconnque des revendications 1 à 4, **caractérisée en ce que** la partie en tête (2104) peut être déplacée à l'intérieur d'un joint d'étanchéité annulaire (2029) prévu à la deuxième extrémité du boîtier, et **en ce que** la partie en tête comporte un troisème passage de transfert du fluide qui communique avec une sortie de la partie en tête, ce troisième passage de transfert du fluide étant à l'exttérieur du boîtier lorsque la tige de soupape se trouve en première position, et à l'intérieur du boîtier lorsque la tige de soupape se trouve en deuxième position.

6. Unité de décharge selon l'une quelconque des revendications 1 à 5, **caractérisée en ce que** l'admission du boîtier est coxiale avec la chambre.

7. Unité de décharge selon l'une quelconque des revendications 1 à 6, **caractérisée en ce que**, lorsque la tige de soupape se trouve dans sa deuxième position limite et l'élément de décharge se trouve dans sa position d'amorçage du liquide, il se crée un passage d'écoulement de recharge entre l'admission de liquide dans le boîtier et la chambre prévue à l'intérieur du corps de la tige de soupape, ce qui permet de recharger un récipient sur lequel est montée l'unité de décharge en cours d'usage.

8. Unité de décharge selon la revendication 7 lorsqu'elle dépend de la revendication 6, **caractérisée en ce que**
(a) une saillie tubulaire (2102) est prévue à l'intérieur du boîter tubulaire allongé autour de l'admission de liquide (2011) de ce boîtier, et
(b) la recharge est assurée par au moins un passage dans la paroi de la saillie tubulaire, et au moins un passage dans la paroi de la chambre accessible au fluide lorsque l'élément de décharge se trouve dans sa position d'amorçage du liquide.

9. Appareil de distribution de liquide doté d'une unité de décharge selon l'une quelconque des revendications 1 à 8, servant à décharger un volume dosé de liiquide contenu dans un récipient pressurisé de l'appareil ou capable de l'être.

10. Appareil de distribution de liquide doté d'une unité de décharge (2003) servant à décharger un volume dosé de liiquide contenu dans un récipient pressurisé de l'appareil, **caractérisé en ce que** l'appareil est doté d'une chambre de dosage (2034) comportant un élément de décharge de liquide (2031) qui peut être déplacé par la pression du fluide provenant du récipient entre une position d'amorçage du liquide et une position de décharge du liquide, afin d'assurer la décharge du volume dosé de liquide, et qui peut être déplacé par une force de retour entre sa position de décharge du liquide et sa position d'amorçage du liquide, **caractérisé en ce que** l'unité de décharge du liquide est celle qui est décrite selon l'une quelconque des revendications 1 à 8

11. Appareil de distribution de liquide selon l'une quelconque des revendications 9 ou 10 qui est un aérosol contenant de préférence une composition pharmaceutique, un parfum, un neutraliseur d'odeurs, un dépilatoire ou un insecticide.

12. Appareil de distribution de liquide selon l'une quelconque des revendications 9 à 11, qui conttient un produit sélectionné dans le groupe comprenant un produit pharmaceutique, un produit agrochimique, un parfum, un désodorisant, un neutraliseur d'odeurs, un désinfectant, un cirage ou encaustique, un insecticdide, un dépilatoire chimique (oar exemple du thioglycolate de cacium), un épilateur chimique, un cosmétique, un déodorant, un produit empêchant la transpiration, un produit anti-bactérien, des composés anti-allergies et des mélanges de deux de ces produits ou davantage.

13. Appareil de distribution de liquide selon l'une quelconque des revendications 9 à 11, qui conttient un produit moussant, ou qui contient en option l'un quelconque des produits définis selon la revendication 11.

14. Inhalateur doseur pharmaceutique comportant une unité de décharge selon l'une quelconque des revendications 1 à 8, et servant à décharge un volume dosé de produit pharmaceutique contenu dans un récipient pressurisé de l'appareil ou capable de l'être.
